Europäisches Patentamt

European Patent Office

Office européen des brevets

(19)

(11) Publication number: **0 431 633 A2**

## EUROPEAN PATENT APPLICATION

(12)

(21) Application number: 90123484.9

(22) Date of filing: 06.12.90

(51) Int. Cl.⁵: **G11B 5/187**, G11B 5/23, G11B 5/31

(30) Priority: 06.12.89 JP 317023/89

(43) Date of publication of application:
**12.06.91 Bulletin 91/24**

(84) Designated Contracting States:
**DE FR GB**

(71) Applicant: **SONY CORPORATION**
**7-35 Kitashinagawa 6-Chome Shinagawa-ku**
**Tokyo 141(JP)**

(72) Inventor: **Morita, Osamu**
**c/o Sony Corporation 7-35 Kitashinagawa**
**6-chome**
**Shinagawa-ku Tokyo(JP)**
Inventor: **Takino, Hiroshi**
**c/o Sony Corporation 7-35 Kitashinagawa**
**6-chome**
**Shinagawa-ku Tokyo(JP)**

(74) Representative: **TER MEER - MÜLLER -**
**STEINMEISTER & PARTNER**
**Mauerkircherstrasse 45**
**W-8000 München 80(DE)**

(54) Magnetic transducer head for narrow track width recording.

(57) A magnetic transducer head is disclosed which has optimum reproducing efficiency for an extremely narrow track width, e.g. as narrow as 5 μm. The magnetic head has a core thickness about 2 to 12 times of the track width.

EP 0 431 633 A2

# MAGNETIC TRANSDUCER HEAD FOR NARROW TRACK WIDTH RECORDING

## BACKGROUND OF THE INVENTION

The present invention relates to a magnetic transducer head for narrow track width recording.

Recent trend toward higher recording density in the magnetic recording field has entailed progressive reduction in the track width on a magnetic recording medium and in recording wavelength. Reduction in the track width results in the reduction of signal output from a magnetic transducer head. Accordingly, it is one of the subjects of designing a magnetic head to provide the magnetic head with capability of operating at a high reproducing efficiency even reproducing from a narrow track width.

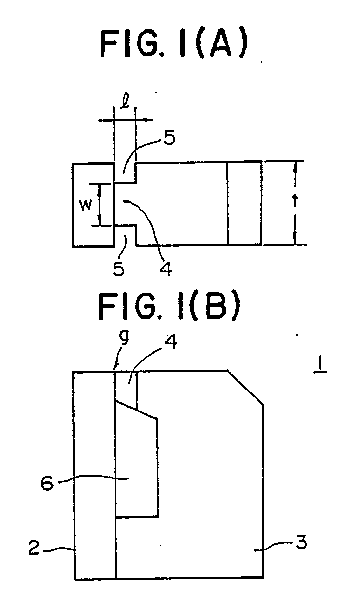

Figs. 1A and 1B show a magnetic head 1 has magnetic core members 2 and 3 mated so as to form a magnetic gap g, and recesses 5 for determining a tack width w are formed in a magnetic gap forming portion 4 of the magnetic core 3. It has been common knowledge that the greater the thickness t of the magnetic core members 2 and 3, the smaller the magnetic reluctance of the magnetic core members 2 and 3, hence the higher the reproducing efficiency. Actually, such common knowledge proves true in two-dimentional magnetic field analysis in which relative magnetic permeability is varied instead of varying the thickness of the core members. Accordingly, it has been considered that the reproducing efficiency of a magnetic head employing magnetic core members having greater thickness is higher.

The track width w the magnetic head may be reduced by reducing the thickness t of the magnetic core members shown in Figs. 1A and 1B. However, a track width w smaller than 5 $\mu$m increases the magnetic reluctance and reduces the reproducing efficiency. Therefore, it may be desirable to reduce the track width w (a width not greater than 5 $\mu$m) and to increase the thickness t of the magnetic core members. However, increase in the thickness t of the magnetic core members, hence the increase in the surface area of the magnetic core members, particularly in the surface areas of portions of the magnetic core members 2 and 3 facing a space 6 for a coil, entails increase in leakage flux, thereby increasing the reproducing efficiency.

## OBJECT AND SUMMARY OF THE INVENTION

In view of the foregoing problems, it is an object of the present invention to provide a narrow-track magnetic head having a narrow track width and capable of reproducing recorded data at an optimum reproducing efficiency.

In one aspect of the present invention, a narrow-track magnetic head comprises mated magnetic core members 2 and 3 forming a magnetic gap g, wherein the ratio t/w, where t is the thickness along the track width of the magnetic core members 2 and 3 excluding the respective portions of the magnetic core members 2 and 3 forming the magnetic gap g, is in the range of 2 to 12.

According to the present invention, the thickness t of the magnetic core members 2 and 3 along the track width of the magnetic core members 2 and 3 excluding portions of the magnetic core members 2 and 3 forming the magnetic gap is in the range of twice to twelve times the track width w, so that the reproducing efficiency of the magnetic head is optimized when the track width w is 10 $\mu$m or below, particularly, when 5 $\mu$m or below.

Although the magnetic reluctance of the magnetic core members 2 and 3 is reduced when the thickness t of the magnetic core members 2 and 3 is greater than twelve times the track width w, leakage flux is increased and, consequently, the reproducing efficiency is reduced. Although leakage flux decreases when the thickness t is less than twice the track width w, the magnetic reluctance of the magnetic core members 2 and 3 increases and, consequently, the reducing rate of the reproducing efficiency increases to reduce the reproducing efficiency.

## BRIEF DESCRIPTION OF THE DRAWINGS

Figures 1A and 1B are a plan view and a side elevation, respectively, of a model of a narrow-track magnetic head in accordance with the present invention;

Figures 2A to 2I are sectional views showing steps of a process of fabricating a narrow-track thin-film magnetic head in accordance with the present invention;

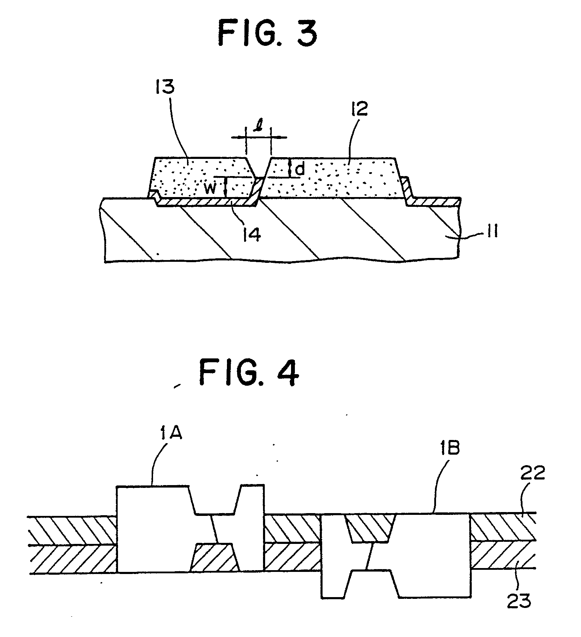

Figure 3 is a sectional view of a thin-film magnetic head for comparison;

Figure 4 is a schematic drawing for explaining a crosstalk measuring method;

Figure 5 is a graph showing the dependence of the reproducing efficiency of a narrow-track magnetic head on the length $\ell$ of the gap forming portion;

Figure 6 is a graph showing the relation between the core thickness t of a narrow-track magnetic head and crosstalk in reproducing recorded signals;

Figure 7 is a graph showing the relation between the core thickness t of a narrow-track magnetic head and reproducing efficiency;

Figures 8A and 8B are a plan view and a sectional view, respectively, of a narrow-track thin-film magnetic head in a second embodiment according to the present invention; and

Figures 9A and 9B are a plan view and a sectional view, respectively, of a narrow-track thin-film magnetic head in a third embodiment according to the present invention.

DESCRIPTION OF THE PREFERRED EMBODIMENTS

Recently, an attempt is being tried to develop a digital video tape recorder using a compact size cassette as small as the conventional 8 mm video cassette. In this attempt, video signal amount of about 32 Mbps is necessary to keep the picture quality. For recording the signal in a cassette having a size as small as the conventional 8 mm video cassette for 2 to 4 hours, recording density of 1 or 2 bit/$\mu$m$^2$ or less is required, where the cassette can be installed with a magnetic tape having a thickness of 7 $\mu$m, an effective width of 4 mm and a length of 120 m. By using an evaporated metal tape and a narrow gap head, shortest recorded wavelength of 0.4 to 0.5 $\mu$m can be achieved. Then the track width is required to be as small as 10 $\mu$m or 5 $\mu$m.

Narrow track magnetic heads in preferred embodiments according to the present invention will be described hereinafter with reference to the accompanying drawings.

The reproducing efficiency of a magnetic head is dependent on two factors, namely, first, the magnetic reluctance of the magnetic core members of the magnetic head, and, secondly, the surface area of the magnetic head. The magnetic reluctance of the magnetic core decreases and the reproducing efficiency increases with increase in the thickness of the magnetic core members. However, increase in the thickness of the magnetic core members, hence, increases the surface area of the magnetic core members, increases leakage flux, which reduces the reproducing efficiency. The reproducing efficiency of the magnetic head is dependent on the combined effect of those relations. It is expected that the rate of increase in the reproducing efficiency due to reduction in the magnetic reluctance of the magnetic head is greater than the rate of reduction of the reproducing efficiency due to increase in leakage flux resulting from increase in the surface area of the magnetic core members, so that the reproducing efficiency of the magnetic head increases with the thickness of the magnetic core members, when the thickness of the magnetic core members is smaller than a certain value, and that the former rate is greater than the latter rate when the thickness of the magnetic core members is greater than the certain value, and hence the reproducing efficiency decreases with the thickness of the magnetic core members.

The inventors of the present invention found conditions for providing a narrow-track magnetic head capable of operating at a satisfactorily high reproducing efficiency through trial manufacture, experiments and three-dimensional analysis, in which the ratio t/w was varied to vary the surface area of the magnetic head, hence the leakage flux.

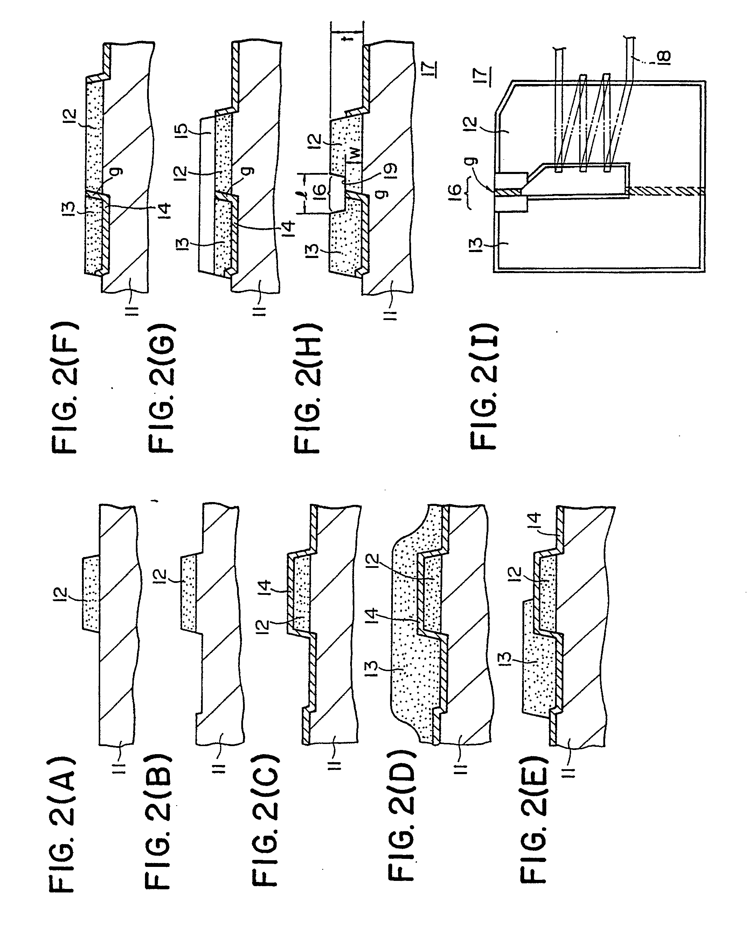

A sample narrow-track thin-film magnetic head fabricated by a process shown in Figs. 2A to 2H was subjected to comparative experiments to examine the reproducing efficiency.

Referring to Figs. 2A to 2H, a magnetic film (a first magnetic core) 12 is formed on a nonmagnetic substrate 11 as shown in Fig. 2A, and then portions of the nonmagnetic substrate 11 on the opposite sides of the magnetic film 12 are etched by a give depth, for example, a depth corresponding to the thickness of a gap spacer, as shown in Fig. 2B. A film of 0.2 $\mu$m in thickness for a gap spacer 14 is formed over the surfaces of the nonmagnetic substrate 11 and the magnetic film 12 including the side surfaces of the magnetic film 12 as shown in Fig. 2C, and then a magnetic film (a second magnetic core) 13 is formed as shown in Fig. 2D. Unnecessary portions of the magnetic film 13 are removed by selective etching as shown in Fig. 2E, and then the surfaces of the magnetic film 13 and the gap spacer 14 are ground to form a magnetic gap g of a track width w between the magnetic films 12 and 13 respectively forming the first and second magnetic core members as shown in Fig. 2F. Subsequently, the magnetic films 12 and 13 are coated with a magnetic film 15 to increase the thickness t of the core members as shown in Fig. 2G, and then a portion of the magnetic film 15 corresponding to a magnetic gap forming portion 16 of a length $\ell$ is removed to complete a narrow-track thin-film magnetic head 17 shown in Figs. 2H and 2I, which is similar in construction as the foregoing magnetic head 1. When the magnetic films are formed of a Co-Zr-Nb alloy and the magnetic films are annealed at 280°C for 30 minutes, the thin film magnetic head has a relative magnetic permeability of about 1000. In Fig. 2I, indicated at 18 is a conductor forming a coil. The description of a coil forming process is omitted.

The crosstalk characteristics and reproducing efficiencies of sample narrow-track thin-film magnetic head having the same construction as that of the narrow-track thin-film magnetic head 17 and respectively having core thicknesses t, track widths w, lengths $\ell$ of the magnetic gap forming portion and magnetic gap lengths S tabulated in the following table were measured.

| Sample number | w ($\mu$m) | t ($\mu$m) | $\ell$ ($\mu$m) | s ($\mu$m) |
|---|---|---|---|---|
| A | 5 | 5 | $\infty$ | 0.2 |
| B | 5 | 10 | 75 | 0.2 |
| C-1 | 5 | 10 | 37.5 | 0.2 |
| C-2 | 5 | 20 | 37.5 | 0.2 |
| C-3 | 5 | 30 | 37.5 | 0.2 |
| C-4 | 5 | 50 | 37.5 | 0.2 |
| C-5 | 5 | 70 | 37.5 | 0.2 |

Crosstalk Measuring Method

The first magnetic head 1A and the second magnetic head 1B are arranged to trace the adjacent first and second tracks 22, 23 respectively, each having a track width of 5 $\mu$m. The distance between the gaps of the heads were 200 $\mu$m. Signals were recorded only on the first track 22 by the first magnetic head 1A. Then the signals were reproduced by the magnetic heads 1A and 1B. Although the magnetic head 1B is expected to provide no output signal, because nothing was recorded on the second track 23, the magnetic head 1B provides output signals corresponding to signals reproduced by and leaked from the magnetic head 1A. Crosstalk is represented by reproduced crosstalk ratio expressed by

$$\text{Crosstalk ratio} = \frac{\text{Output signal of the magnetic head 1B}}{\text{Output signal of the magnetic head 1A}}$$

Reproducing Efficiency Measuring Method

The same signals recorded in a magnetic tape by a reference magnetic head are reproduced by the sample magnetic heads, which are different from each other in core thickness. Reproducing efficiency is represented by the ratio of the output signal of the sample magnetic head to the magnetomotive force for recording.

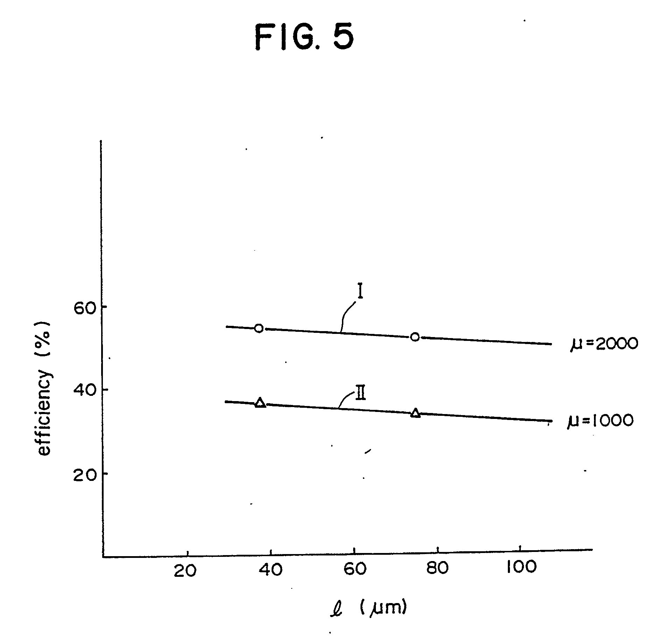

The variation of measured reproducing efficiency of the narrow-track thin-film magnetic head 17 of a relative magnetic permeability of 2000 (curve I) and the narrow-track thin-film magnetic head 17 of a relative magnetic permeability of 1000 (curve II) fabricated by the foregoing method with the length $\ell$ of the gap forming portion is shown in Fig. 5. As is obvious from Fig. 5, the magnetic reluctance decreases and the reproducing efficiency increases gradually with the length $\ell$. Since the groove 19 is formed in the gap forming portion 16 along the core thickness, it is difficult to form the gap forming portion in a length $\ell$ approximately equal to or smaller than the depth d of the groove 19, it is possible that the magnetic head picks up the magnetic flux of the adjacent track due to errors in the track width w. Accordingly, the length $\ell$ of the sample magnetic heads are 37.5 $\mu$m and 75 $\mu$m. However, the length $\ell$ may be in the range of 20 to 80 $\mu$m.

EP 0 431 633 A2

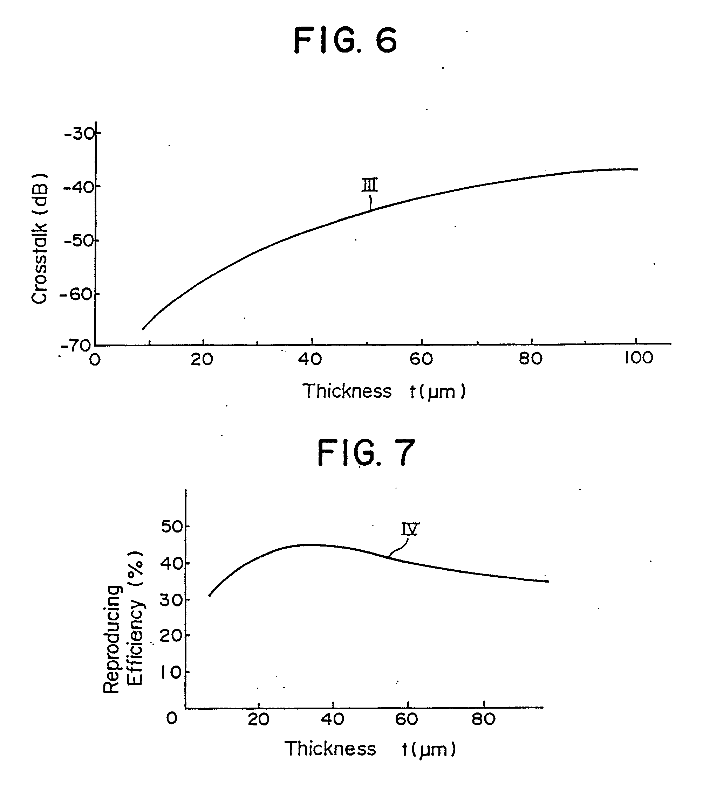

Crosstalk in reproducing the recorded signals recorded in the track was measured for the sample magnetic heads C-1, C-2, C-3, C-4 and C-5, which have the same track width w of 50 $\mu$m, the same length $\ell$ of 37.5 $\mu$m, the same relative magnetic permeability $\mu$ of 1000 and different core thicknesses t of 10 $\mu$m, 20 $\mu$m, 30 $\mu$m, 50 $\mu$m and 70 $\mu$m, respectively. As indicated by a curve III in Fig. 6, crosstalk increases with the core thickness t in reproducing the recorded signal. A curve IV shown in Fig. 7 indicates the dependence of the measured reproducing efficiencies of the samples C-1, C-2, C-3, C-4 and C-5 of $\mu$ = 1000 on the core thickness t. In this example, the maximum reproducing efficiency is achieved when the core thickness t is in the range of 30 to 40 $\mu$m, because the surface area of the core members increases with the core thickness t and, consequently, crosstalk in reproducing the recorded signal and leakage flux from portions of the magnetic core members other than the portion having the magnetic gap g decreases gradually with the core thickness t in a range where t $\geq$ 50 $\mu$m. From Fig. 7, a desirable core thickness t is in the range of 20 to 60 $\mu$m when practically acceptable reproducing efficiency is not less than 40%, and hence the ratio t/w is in the range of 4 to 12, more preferably, in the range of 4 to 10. Generally, the magnetic core having a higher relative magnetic permeability has a lower reproducing efficiency and a smaller ratio t/w. Accordingly, when the relative magnetic permeability $\mu$ is in the range of about 1000 to about 2000, a desirable value of the ratio t/w is in the range of 2 to 12, more desirably in the range of 3 to 10. When the ratio t/w is smaller than 2, the magnetic reluctance increases to reduce the reproducing efficiency to an unacceptable level. When the ratio t/w is greater than 12, flux leakage and crosstalk increase to reduce the reproducing efficiency to an unacceptable level.

From the measured results, the ratio t/w of the narrow-track thin-film magnetic head 17 in accordance with the present invention is in the range of 2 to 12 to enable the narrow-track thin-film magnetic head 17 having a track width 10 $\mu$m or below, more specifically, 5 $\mu$m or below, to operate at a sufficiently high reproducing efficiency. Thus, the reduction of the reproducing efficiency attributable to increase in the magnetic reluctance of the magnetic core in the vicinity of the magnetic gap due to reduction in the track width of the magnetic head can be avoided, and hence the magnetic head is capable of providing a sufficiently high output to enable high-density magnetic recording.

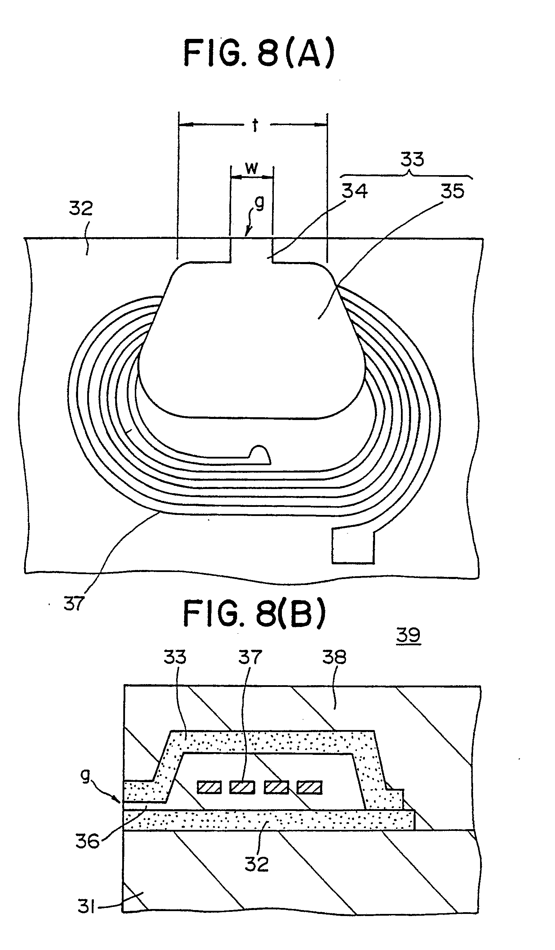

Figs. 8A and 8B show a narrow-track thin-film magnetic head 39 in a second embodiment according to the present invention. Referring to Figs. 8A and 8B, an insulating layer 36 is formed on the major surface of a nonmagnetic substrate 31, and mated magnetic core members 32 and 33 formed of a ferromagnetic thin film are formed on the insulating layer 36. The magnetic core elements 32 and 33 are formed so as to define a gap 34 defining a track width w, and a wide space 35 behind the gap 34. The respective rear ends of the magnetic core elements 32 and 33 are joined magnetically to each other. A coil 37 is formed around the magnetic core members 32 and 33. Indicated at 38 is an insulating layer. The ratio t/w, where t is the core thickness and w is the track width, of the narrow-track thin-film magnetic head 39 thus constructed is in the range of 2 to 12.

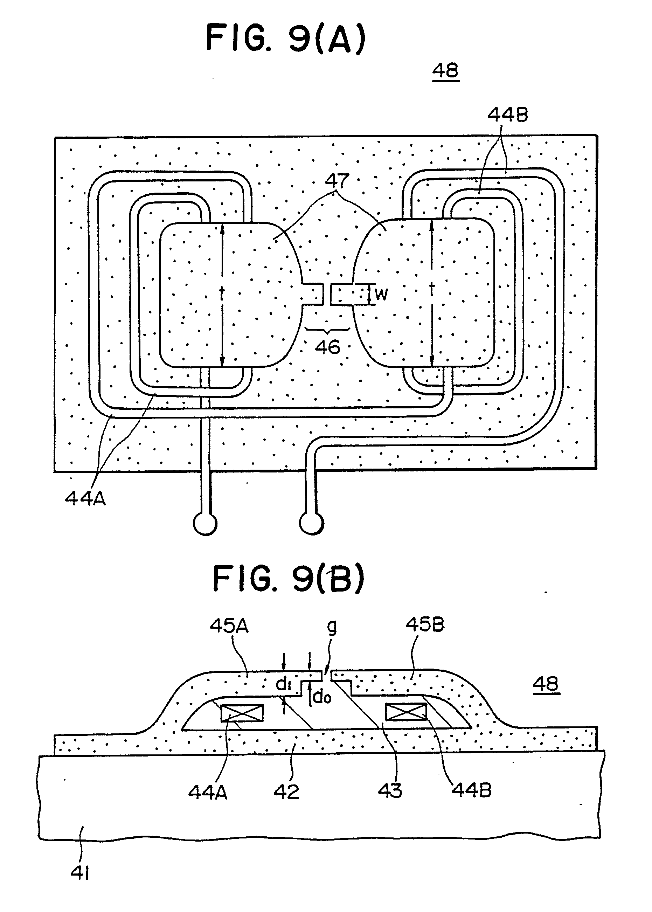

Figs. 9A and 9B show a narrow-track thin-film magnetic head 48 in a third embodiment according to the present invention. Referring to Figs. 9A and 9B, a lower magnetic core member 42 of a soft magnetic thin film is formed on a slider substrate 41, an insulating layer 43 is formed over the lower magnetic core member 42, coils 44A and 44B are formed in the insulating layer 43, and a pair of yokes 45A and 45B formed of a soft magnetic thin film are formed on the insulating layer 43 so that respective portions thereof are connected electrically to the lower magnetic core member 42, and a magnetic gap g is formed between the respective extremities of the pair of soft magnetic thin film yokes 45A and 45B. As shown in Fig. 9A, the pair of soft magnetic thin film yokes 45A and 45B have each a narrower gap forming portion 46 defining a track width w, and a wider portion 47 extending behind the gap forming portion 46. As shown in Fig. 9B, the thickness $d_0$ of the gap forming portions 46, corresponding to gap depth is smaller than the thickness $d_1$ of other portions of the yokes 45A and 45B. The coils 44A and 44B are wound respectively around the yokes 45A and 45B. The ratio t/w of the narrow-track thin-film magnetic head 48 thus constructed is in the range of 2 to 12.

The narrow-track thin-film magnetic heads 39 and 48 shown in Figs. 8A, 8B, 9A and 9B, similarly to the narrow-track thin-film magnetic head 17, are capable of operating at an optimum reproducing efficiency. Although the present invention has been described with reference to the narrow-track thin-film magnetic heads of an inductive type, the present invention is applicable to a narrow-track magnetic head of a bulk type (inductive type).

As is apparent from the foregoing description, the ratio t/w, where t is the thickness of the magnetic core along track width excluding the magnetic gap forming portion, and w is track width, is in the range of 2 to 12 to enable the narrow-track magnetic head having a track width of 10 $\mu$m or below, preferably, 5 $\mu$m or below, to function at an optimum reproducing efficiency, so that the narrow-track magnetic head is capable of providing a sufficiently high output to enable high-density magnetic recording.

5

**Claims**

1. A magnetic transducer head comprising a pair of magnetic cores (2,3) forming a gap (g) therebetween, said cores (2,3) having a thickness t and said gap (g) having a width w along a track width direction, said width w being defined by a notch (5) provided at least at one side of said gap (g), wherein said width w is not greater than 10 μm and the ratio t/w is in the range of 2 to 12.

2. A magnetic transducer head according to claim 1, wherein said notch (5) has a width ℓ between 20 and 80 μm measured along a relative motion direction between the magnetic head and a magnetic recording medium.

3. A magnetic transducer head according to claim 1, wherein said width w is not greater than 5 μm.

# FIG. I(A)

# FIG. I(B)

FIG. 2(A)

FIG. 2(B)

FIG. 2(C)

FIG. 2(D)

FIG. 2(E)

FIG. 2(F)

FIG. 2(G)

FIG. 2(H)

FIG. 2(I)

# FIG. 3

# FIG. 4

# FIG. 5

# FIG. 6

# FIG. 7

# FIG. 8(A)

# FIG. 8(B)

# FIG. 9(A)

# FIG. 9(B)